# EUROPÄISCHE PATENTSCHRIFT

(11) **EP 3 504 437 B1**
(45) Veröffentlichungstag und Bekanntmachung des Hinweises auf die Patenterteilung: **12.08.2020**
(21) Anmeldenummer: 17764772.4
(22) Anmeldetag: 28.08.2017
(51) Int. Cl.: F04B 39/04, F04B 53/16, F16J 15/26, F16J 15/24, F16J 15/3268, F04B 27/04, F04B 27/053, F04B 35/01

(54) **ÖLABSTREIFPACKUNG**
OIL STRIPPING PACKAGING
GARNITURE RACLEUSE D'HUILE

(30) Priorität: 26.08.2016 EP 16185841
(43) Veröffentlichungstag der Anmeldung: 03.07.2019
(73) Patentinhaber: Burckhardt Compression AG, 8404 Winterthur (CH)
(72) Erfinder: FEISTEL, Norbert, 8548 Ellikon a.d. Thur Zürich (CH)
(74) Vertreter: Dr. Graf & Partner AG
(86) Internationale Anmeldenummer: PCT/EP2017/071582
(87) Internationale Veröffentlichungsnummer: WO 2018/037135

(56) Entgegenhaltungen:
- AT-B1- 514 335
- CN-B- 103 075 268
- CN-U- 205 478 181
- DE-T2- 60 218 091
- DE-U1- 9 190 040

## Beschreibung

Die Erfindung betrifft eine Ölabstreifpackung. Die Erfindung betrifft weiter ein Verfahren zum Einbau einer Ölabstreifpackung.

### Stand der Technik

Kreuzkopf-Kolbenkompressoren umfassen üblicherweise einen Zylinder sowie einen darin angeordneten, hin- und her bewegbaren Kolben. Der Kolben ist über eine Kolbenstange mit einer Antriebsvorrichtung verbunden ist. Die Antriebsvorrichtung umfasst üblicherweise einen Kreuzkopf, welcher aus einer rotierenden Bewegung eine lineare Bewegung erzeugt, wobei der Kreuzkopf üblicherweise geschmiert ist, und wobei die Kolbenstange mit dem Kreuzkopf verbunden ist. In einer vorteilhaften Ausgestaltung umfasst ein Kreuzkopf-Kolbenkompressor zumindest eine Ölabstreifpackung sowie eine Dichtpackung, wobei die Kolbenstange durch diese beiden Packungen verläuft. Die Ölabstreifpackung dient dazu kreuzkopfseitig Schmiermittel von der Kolbenstange abzustreifen. Die Dichtpackung dient dazu zylinderseitig eine Leckage des im Zylinder komprimierten Fluides entlang der Kolbenstange zu verhindern. Das Dokument AT514335B1 offenbart eine Dichtpackung. Die Dokumente CN103075268B sowie DE9190040U1 offenbaren Ölabstreifpackungen für die Kolbenstange von Dieselmotoren.

Das Dokument EP1283363A2 offenbart eine derartige Ölabstreifpackung für einen Kreuzkopf-Kolbenkompressor. Diese Ölabstreifpackung weist den Nachteil auf, dass Schmieröl durch die Ölabstreifpackung hindurchtreten kann, was einen kontinuierlichen Ölverlust zur Folge hat, was wiederum eine Schädigung des Kreuzkopfmechanismus zur Folge haben kann. Zudem besteht die Gefahr, dass Schmieröl mit dem komprimierten Fluid in Kontakt tritt und dieses verunreinigt.

### Darstellung der Erfindung

Es ist Aufgabe der vorliegenden Erfindung eine verbesserte Ölabstreifpackung vorzuschlagen. Diese Aufgabe wird gelöst mit einer Ölabstreifpackung umfassend die Merkmale von Anspruch 1. Die abhängigen Ansprüche 2 bis 14 betreffen weitere, vorteilhafte Ausgestaltungen. Die Aufgabe wird weiter gelöst mit einem Verfahren zum Einbau einer Ölabstreifpackung aufweisend die Merkmale von Anspruch 15. Die abhängigen Ansprüche 16 bis 19 betreffen weitere, vorteilhafte Verfahrensschritte.

Die Aufgabe wird insbesondere gelöst mit einer Ölabstreifpackung für eine Kolbenstange eines Kreuzkopf-Kolbenkompressors, umfassend
- eine Kammerscheibe aufweisend eine Kammerscheibenausnehmung sowie aufweisend eine Trennwand mit einer Bohrung, wobei die Trennwand die Kammerscheibenausnehmung seitlich begrenzt, und wobei die Bohrung zum Durchführen der Kolbenstange vorgesehen ist, sowie umfassend
- einen Abstreifring, wobei der Abstreifring in der Kammerscheibenausnehmung angeordnet ist,
   wobei in einer Verlaufsrichtung nacheinander und in gleicher Ausrichtung zumindest zwei Kammerscheiben aufweisend je eine Kammerscheibenausnehmung sowie eine Trennwand angeordnet sind, und wobei in jeder Kammerscheibenausnehmung ein einziger Abstreifring angeordnet ist.

Die Aufgabe wird zudem insbesondere gelöst mit einem Verfahren zum Einbau einer Ölabstreifpackung in einen Kreuzkopf-Kolbenkompressor, wobei der Kreuzkopf-Kolbenkompressor eine sich in einer Verlaufsrichtung erstreckende Kolbenstange umfasst,
- indem in einem ersten Verfahrensschritt die Ölabstreifpackung vorkonfiguriert wird, indem in einer Kammerscheibe aufweisend eine Kammerscheibenausnehmung sowie aufweisend eine Trennwand mit einer Bohrung ein Abstreifring in der Kammerscheibenausnehmung angeordnet wird, wobei die Kammerscheibenausnehmung durch die Trennwand seitlich begrenzt wird, und indem zumindest zwei Kammerscheiben mit jeweils darin angeordnetem Abstreifring in einer Verlaufsrichtung nacheinander angeordnet werden und die Kammerscheiben miteinander verbunden werden, und
- indem in einem zweiten Verfahrensschritt die vorkonfigurierte Ölabstreifpackung durch eine Bewegung in Verlaufsrichtung derart an der Kolbenstange angeordnet wird, dass die Kolbenstange durch jeweils eine Bohrung der Trennwand verläuft, und die Kammerscheibe sowie der Abstreifring die Kolbenstange umschliesst.

Die Aufgabe wird zudem insbesondere gelöst mit einer Ölabstreifpackung für eine Kolbenstange eines Kreuzkopf-Kolbenkompressors, umfassend eine Kammerscheibe aufweisend eine Kammerscheibenausnehmung, wobei in der Kammerscheibenausnehmung ein Abstreifring angeordnet ist, wobei in einer Verlaufsrichtung nacheinander zumindest zwei Kammerscheiben aufweisend je eine Kammerscheibenausnehmung angeordnet sind, und wobei in jeder Kammerscheibenausnehmung ein einziger Abstreifring angeordnet ist.

Die Aufgabe wird zudem insbesondere gelöst mit einem Verfahren zum Einbau einer Ölabstreifpackung in einen Kreuzkopf-Kolbenkompressor umfassend eine Kolbenstange, wobei die Ölabstreifpackung zumindest zwei in einer Verlaufsrichtung beabstandete Kammerscheiben aufweisend Kammerscheibenausnehmungen zur Aufnahme je eines Abstreifrings umfasst, wobei je ein einziger Abstreifring in je einer Kammerscheibenausnehmung angeordnet werden, wobei die Kammerscheiben umfassend die Kammerscheibenausnehmungen fest miteinander verbunden werden zu einer vorkonfigurierten Ölabstreifpackung, und wobei die vorkonfigurierte Ölabstreifpackung in den Kreuzkopf-Kolbenkompressor eingebaut wird und dabei die Kolbenstange in die vorkonfigurierte Ölabstreifpackung sowie in deren Abstreifringe eingeführt wird.

Die erfindungsgemässe Ölabstreifpackung für eine Kolbenstange eines Kreuzkopf-Kolbenkompressors umfasst in deren Verlaufsrichtung zumindest zwei gegenseitig beabstandete Kammerscheibenausnehmungen, wobei in jeder Kammerscheibenausnehmung ein einziger Abstreifring angeordnet ist. Jede Kammerscheibe weist eine Kammerscheibenausnehmung auf, wobei jede Kammerscheibe zudem eine Trennwand umfasst, welche die Kammerscheibenausnehmung in Verlaufsrichtung seitlich auf einer Seite begrenzt, wobei die Trennwand eine Bohrung aufweist, durch welche die Kolbenstange verläuft, wenn die Ölabstreifpackung am Kreuzkopf-Kolbenkompressor befestigt ist. Diese Anordnung von je einem einzigen Abstreifring pro Kammerscheibenausnehmung weist den Vorteil auf, dass die Ölabstreifpackung ein vorteilhaftes Ölabstreifen ermöglicht, weil die Ausbreitung des Öls in Verlaufsrichtung der Kolbenstange behindert wird.

Die Wirkungsweise der erfindungsgemässen Ölabstreifpackung für eine Kolbenstange eines Kreuzkopf-Kolbenkompressors kann zudem durch die Berücksichtigung des nachfolgenden Effektes zusätzlich verbessert werden. Es hat sich gezeigt, dass ein sich in der Kammerscheibenausnehmung befindlicher Abstreifring zumindest einer der drei nachfolgenden Betriebszustände einnehmen kann:
1) Der Abstreifring lässt sich innerhalb der Kammerscheibenausnehmung in radialer Richtung verschieben und weist in Verlaufsrichtung der Kolbenstange ein Spiel auf, was zur Folge hat, dass der Abstreifring innerhalb der Kammerscheibenausnehmung in Verlaufsrichtung der Kolbenstange hin- und herbewegt wird, was wiederum zur Folge hat, dass, wenn Öl vorhanden ist, das Öl über dem äusseren Rand des Abstreifrings von der einen zur anderen Stirnseite des Abstreifrings gepumpt wird, wodurch dem Kreuzkopf unter Umständen eine erhebliche Menge Öl entzogen werden kann, sodass ein Ölverlust resultiert.
2) Der Abstreifring hat sich auf Grund einer Wärmeausdehnung in Verlaufsrichtung der Kolbenstange innerhalb der Kammerscheibenausnehmung verklemmt, sodass der Abstreifring in radialer Richtung nicht mehr bewegbar ist. Dies hat zur Folge, dass der Abstreifring nicht mehr optimal an der Oberfläche der Kolbenstange anliegt, sodass der Abstreifringe in axialer Richtung nicht mehr abdichtet, und/oder dass der Abstreifring einen erhöhten Verschleiss erfährt.
3) Der Abstreifring ist vorteilhafterweise derart in der Kammerscheibenausnehmung angeordnet, dass dieser in Verlaufsrichtung der Kolbenstange ein vernachlässigbar kleines Spiel aufweist, oder dass der Abstreifring in Verlaufsrichtung der Kolbenstange formschlüssig in der Kammerscheibenausnehmung angeordnet ist, sodass der Abstreifring in Verlaufsrichtung der Kolbenstange kein Spiel aufweist und trotzdem in radialer bewegbar ist, was zur Folge hat, dass der Abstreifring innerhalb der Kammerscheibenausnehmung radial zur Verlaufsrichtung der Kolbenstange bewegbar ist, sodass der Abstreifring einer allfälligen Bewegung der Kolbenstange in radialer Richtung folgen kann und daher vorteilhaft an der Kolbenstange anliegt und abdichtet. Diese Anordnung weist einerseits den Vorteil auf, dass kein Pumpen und somit kein Öltransfer über den äusseren Rand des Abstreifrings zu den beiden Stirnseiten des Abstreifrings stattfindet, und dass Öl, welches auf der Oberfläche der Kolbenstange Öl anliegt, vorzugsweise vollständig abgestreift wird, sodass das Öl nicht mit dem komprimierten Fluid auf der Kolbenseite der Kolbenstange in Kontakt tritt.

In einer besonders vorteilhaften Ausgestaltung der Erfindung gilt es somit sicherzustellen, dass in einer Ölabstreifpackung zumindest einer der Abstreifringe den vorhin als Betriebszustand 3) bezeichneten Betriebszustand aufweist.

Die erfindungsgemässe Ölabstreifpackung weist zumindest zwei Kammerscheiben mit je einem einzigen darin angeordneten Abstreifring auf, und weist vorteilhafter drei oder auch noch mehr Kammerscheiben mit je einem einzigen darin angeordneten Abstreifring auf.

Es hat sich gezeigt, dass es äusserst schwierig ist zu bestimmen, in welchem der drei oben genannten Betriebszustände sich der jeweilige Abstreifring in der Kammerscheibenausnehmung befindet, da der aktuell sich ergebende Betriebszustand insbesondere von der Temperatur des Abstreifrings beziehungsweise von der Reibung des Abstreifrings an der Kolbenstange abhängig ist. Dies hängt auch damit zusammen, dass die Abstreifringe üblicherweise aus Kunststoff bestehen oder Kunststoff umfassen, und dass die Kammerscheiben aus Metall bestehen. Der Kunststoff weist eine wesentlich höhere Wärmeausdehnung aus als Metall, wobei die Wärmeausdehnung von Kunststoff beispielsweise zehn Mal grösser sein kann als diejenige von Metall. Deshalb kann sich ein Abstreifring in Abhängigkeit von dessen Erwärmung in einem der Betriebszustände 1), 2) oder 3) befinden. Wieweit ein Abstreifring sich erwärmt hängt von unterschiedlichen Faktoren ab, wie zum Beispiel Betriebsdauer, Stillstand bzw. Anlauf der Anlage, Abnutzung des Abstreifrings, ursprünglich eingestelltes Spiel in Verlaufsrichtung der Kolbenstange, vorhandene Ölmenge auf der Kolbenstange usw. Es ist daher äusserst anspruchsvoll und schwierig zu gewährleisten, dass sich der Abstreifring im Betriebszustand 3) befindet. Es ist daher in einer bevorzugten Ausführungsform erforderlich sicherzustellen, dass das Spiel des Abstreifrings in Verlaufsrichtung der Kolbenstange bei der Montage der Ölabstreifpackung derart eingestellt wird, dass der Abstreifring während des Betriebs möglichst der Betriebszustand 3) aufweist. Der Abstreifring und die Kammerscheibe können in einer Vielzahl von Materialpaarungen ausgestaltet sein, insbesondere aus den Paarungen Metall-Metall, Metall-Kunststoff, Kunststoff-Metall oder Kunststoff-Kunststoff. Die Kammerscheibe ist vorzugsweise aus einem Metall, z.B. Guss oder Stahl, oder z.B. auch aus einem Kunststoff wie PEEK gefertigt. Der Abstreifring ist vorzugsweise aus einem Kunststoff wie PTFE, PEEK, oder einem Metall wie Aluminium, Bronze oder Messing, oder einer Kombination von Kunststoff und Metall gefertigt.
Die Paarung Metall-Metall kann aus demselben Metall bestehen, beispielsweise Aluminium, oder aus unterschiedlichen Metallen. Die Paarung Kunststoff-Kunststoff kann aus demselben Kunststoff bestehen oder aus unterschiedlichen Kunststoffen. Möglich ist auch eine Metall-Kunststoff-Paarung, indem der Abstreifring aus Metall wie Aluminium besteht und die Kammerscheibe aus Kunststoff wie PEEK besteht.
In einer besonders vorteilhaften Ausgestaltung sind die Kammerscheibe, umfassend die Kammerscheibenausnehmung und die Trennwand, und der Abstreifring bei deren Montage, welche üblicherweise bei Umgebungstemperatur beziehungsweise im Kaltzustand des Kreuzkopf-Kolbenkompressors erfolgt, derart gegenseitig angepasst, dass die Kammerscheibenausnehmung in Verlaufsrichtung der Ölabstreifpackung eine Kammerinnenraumhöhe aufweist, welche zwischen 0 mm bis 0,5 mm grösser ist als die Höhe des Abstreifrings, sodass der Abstreifring bei Umgebungstemperatur bzw. im Kaltzustand einen Formschluss, d.h. ein Spiel von 0 mm, oder ein Spiel zwischen grösser 0 mm bis 0,5 mm aufweist. Dies erhöht die Wahrscheinlichkeit, dass der Abstreifring während dem Betrieb den Betriebszustand 3) einnimmt. In einer vorteilhaften Ausgestaltung weisen alle Abstreifringe im Kaltzustand dasselbe Spiel auf. Bei der erfindungsgemässen Ölabstreifpackung sind die jeweils verwendeten Materialien von Kammerscheibe und Abstreifring sowie die Wärmeausdehnungskoeffizienten dieser verwendeten Materialien bekannt. Zudem sind die sich während des Betriebs zu erwartenden Temperaturen der Abstreifringe auf Grund von Erfahrungswerten oft ungefähr bekannt. Basierend auf diesen Daten ist es somit möglich die Breite des Abstreifrings sowie die Breite der Kammerscheibenausnehmung in Verlaufsrichtung derart zu berechnen beziehungsweise vorzugeben, dass während des Betriebs, insbesondere nach erfolgtem Anfahren der Anlage während eines Dauerbetriebszustandes, währen welchem die Temperaturen von Abstreifring und Kammerscheibe im Wesentlichen konstant bleiben, möglichst der Betriebszustand 3) auftritt, und der Betriebszustand 2) nach Möglichkeit verhindert wird.

In einer weiteren, vorteilhaften Ausgestaltung könnten zumindest einer und vorzugsweise jeder der Abstreifringe im Kaltzustand in dessen Kammerscheibenausnehmung ein unterschiedliches Spiel aufweisen. Die axiale Ausdehnung der Abstreifringe während dem Betrieb ist primär von der erzeugten Reibungswärme abhängig, und diese ist wiederum insbesondere vom Reibkoeffizienten abhängig. In der ersten, dem Triebwerk bzw. dem Kreuzkopf zugewandten Kammer weist die Oberfläche der Kolbenstange am meisten Öl und daher den niedrigsten Reibkoeffizienten auf. In den nachfolgenden Kammern nimmt die Ölmenge an der Oberfläche der Kolbenstange ab, sodass der Abstreifring in der oder in den nachfolgenden Kammerscheibenausnehmung zunehmend in Trockenlauf übergeht, was einen deutlich höheren Reibkoeffizient und damit eine höhere erzeugte Reibwärme zur Folge hat, was wiederum eine höhere Wärmeausdehnung des Abstreifrings zu Folge hat. In einer vorteilhaften Ausgestaltung könnten die Kammerscheiben beziehungsweise die Abstreifringe derart ausgestaltet sein, dass im Kaltzustand bzw. bei Umgebungstemperatur, beginnend mit der triebwerkseitigen Kammer, die in Verlaufsrichtung der Kolbenstange nacheinander folgend angeordneten Paarungen von Abstreifring und Kammerscheibe beziehungsweise Kammerscheibenausnehmung ein zunehmend grösseres Spiel aufweisen.

In einer weiteren, vorteilhaften Ausführungform ist die Ölabstreifpackung derart ausgestaltet, dass der Abstreifring einen höheren Wärmeausdehnungskoeffizient als die Kammerscheibe aufweist, dass der Abstreifring bei Umgebungstemperatur in Verlaufsrichtung L ein Spiel in der Kammerscheibenausnehmung aufweist, und dass der Abstreifring bei einer Betriebstemperatur T_{b}, welche höher als die Umgebungstemperatur ist, ein reduziertes Spiel oder einen Formschluss in der Kammerscheibenausnehmung aufweist.

Die erfindungsgemässe Ölabstreifpackung weist den Vorteil auf, dass das Spiel des Abstreifrings innerhalb der Kammerscheibenausnehmung werkseitig vorkonfiguriert werden kann, oder am Betriebsort vor dem Einbau in den Kreuzkopf-Kolbenkompressor zusammengebaut und überprüft werden kann. Dadurch kann sichergestellt werden, dass die Abstreifringe optimal in der Ölabstreifpackung angeordnet sind. Eine bisher verwendete Ölabstreifpackung eines Kreuzkopf-Kolbenkompressors kann zudem auf einfache und schnelle Weise durch die erfindungsgemässe, vorkonfigurierte Ölabstreifpackung ausgetauscht werden. Die erfindungsgemässe Ölabstreifpackung umfasst zumindest zwei Kammerscheiben, wobei jede Kammerscheibe eine Kammerscheibenausnehmung sowie eine Trennwand mit einer Bohrung aufweist, wobei die Trennwand die Kammerscheibenausnehmung seitlich begrenzt. Die erfindungsgemässe Ölabstreifpackung weist den Vorteil auf, dass diese werkseitig vorkonfiguriert und zusammengebaut werden kann, und dass die Ölabstreifpackung im zusammengebauten Zustand, das heisst ohne Demontage, am Einsatzort über die Kolbenstange des Kreuzkopf-Kolbenkompressors geschoben werden kann. Dadurch ist eine einfache, sichere, kostengünstige, reproduzierbare und wenig spezifisches Fachwissen erfordernde Montage am Einsatzort des Kolbenkompressors gewährleistet. Das im Kaltzustand bzw. bei Umgebungstemperatur optimale Spiel des Abstreifrings in der Kammerscheibe ist unter anderem abhängig von der Materialpaarung von Abstreifring und Kammerscheibe, und ist unter anderem abhängig von der Position des Abstreifrings in Verlaufsrichtung der Ölabstreifpackung. Die erfindungsgemässe Ölabstreifpackung weist den Vorteil auf, dass all diese Aspekte werkseitig vorkonfiguriert werden können, und der Zusammenbau der Ölabstreifpackung werkseitig erfolgen kann, sodass die Ölabstreifpackung am Einsatzort nur noch als vorgefertigtes Teil zu montiert ist, sodass gewährleistet ist, dass die Abstreifringe nach der Montage der Ölabstreifpackung an der Kolbenstange optimal innerhalb der
Kammerscheibenausnehmungen angeordnet sind.
In einer vorteilhaften Ausgestaltung weist die vorkonfigurierte Ölabstreifpackung zudem eine seitliche Öffnung auf, welche derart ausgestaltet und angeordnet ist, dass das Spiel des Abstreifrings noch messbar ist, wenn die Ölabstreifpackung zusammengebaut ist, oder wenn die Ölabstreifpackung am Kreuzkopf-Kolbenkompressor eingebaut ist. Dies weist den Vorteil auf, dass das Spiel des Abstreifrings auch unmittelbar nach dem Einbau der Ölabstreifpackung überprüfbar ist, oder dass bei einer späteren Wartung der Ölabstreifpackung das Spiel des Abstreifrings überprüfbar ist.

Die erfindungsgemässe Ölabstreifpackung weist einen reduzierten Verschleiss auf, ist länger betreibbar, kann auf einfache und kostengünstige Weise ersetzt werden, und hat geringere Maschinenausfallzeiten und Maschinenstoppzeiten zur Folge.

Die Erfindung wird nachfolgend an Hand mehrere Ausführungsbeispiele beschrieben.

### Kurze Beschreibung der Zeichnungen

Die zur Erläuterung der Ausführungsbeispiele verwendeten Zeichnungen zeigen:
Fig. 1 einen Längsschnitt durch eine Ölabstreifpackung;
Fig. 2 die Ölabstreifpackung gemäss Figur 1 eingebaut in ein Gehäuse;
Fig. 3 einen Längsschnitt durch einen Abstreifring;
Fig. 4 eine Draufsicht auf den Abstreifring gemäss Fig. 3;
Fig. 5 einen Längsschnitt durch eine Vorabstreiferkammerscheibe;
Fig. 6 eine Draufsicht auf die Vorabstreiferkammerscheibe gemäss Fig. 5;
Fig. 7 eine perspektivische Ansicht einer Kammerscheibe mit Trennwand;
Fig. 8 eine perspektivische Ansicht einer weiteren Ausführungsform einer Kammerscheibe;
Fig. 9 einen Längsschnitt durch einen Kolbenkompressor;
Fig. 10 einen Längsschnitt durch ein weiteres Ausführungsbeispiel einer Ölabstreifpackung;
Fig. 11 eine perspektivische Ansicht einer weiteren Ausführung einer Kammerscheibe mit Trennwand.

Grundsätzlich sind in den Zeichnungen gleiche Teile mit gleichen Bezugszeichen versehen.

### Wege zur Ausführung der Erfindung

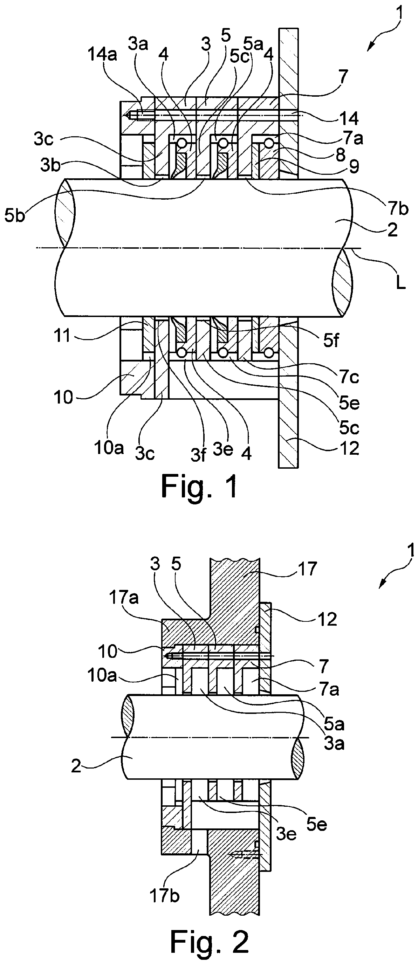

Fig. 1 zeigt eine Ölabstreifpackung 1 für eine in einer Längsrichtung L verlaufende sowie hin- und her bewegliche Kolbenstange 2 eines Kreuzkopf-Kolbenkompressors. Die Ölabstreifpackung 1 umfasst zwei in Längsrichtung L nacheinander angeordnete Kammerscheiben 3, 5 aufweisend je eine Kammerscheibenausnehmung 3a, 5a, sowie aufweisend eine Trennwand 3c, 5c mit einer Bohrung 3f, 5f, wobei die Trennwand 3c, 5c die Kammerscheibenausnehmung 3a, 5a seitlich begrenzt, und wobei die Bohrung 3f, 5f zum Durchführen der Kolbenstange 2 vorgesehen ist. Eine Kammerscheibe 3,5 weist jeweils eine Trennwand 3c, 5c, auf. In jeder Kammerscheibenausnehmung 3a, 5a ist ein einziger Abstreifring 4 angeordnet. Wie aus Figur 1 ersichtlich sind in einer Verlaufsrichtung L nacheinander und in gleicher Ausrichtung zumindest zwei Kammerscheiben 3, 5 aufweisend je eine Kammerscheibenausnehmung 3a, 5a sowie eine Trennwand 3c, 5c angeordnet, wobei in jeder Kammerscheibenausnehmung 3a, 5a ein einziger Abstreifring 4 angeordnet ist. Die beiden Kammerscheiben 3, 5 sind in Verlaufsrichtung L gleich beziehungsweis identisch ausgerichtet angeordnet, indem bei jeder Kammerscheibe 3,5 jeweils links die Trennwand 3c, 5c angeordnet ist, und in Verlaufsrichtung L nachfolgend die Kammerscheibenausnehmung 3a, 5a folgt.

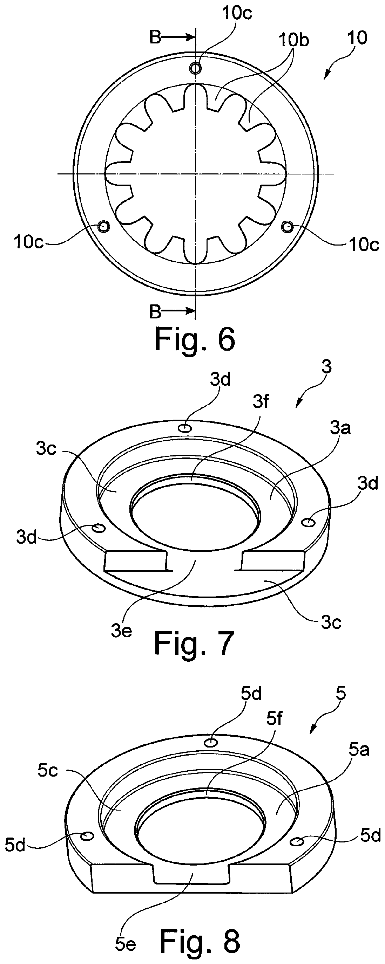

In einer vorteilhaften Ausgestaltung umfasst die Ölabstreifpackung 1 zudem eine Befestigungsplatte 12 mit welcher zumindest die beiden Kammerscheiben 3, 5 verbunden sind, zum Beispiel über eine nicht dargestellte, durch die Bohrung 14 und das Gewinde 14a verlaufende Schraube, sodass die beiden Kammerscheiben 3, 5 mit Hilfe der Schrauben fest und lösbar mit der Befestigungsplatte 12 verbunden sind. Vorteilhafterweise weisen die Kammerscheiben 3, 5 eine Auslassöffnung 3e, 5e auf, durch welche abgestreiftes Öl entweichen kann. Vorteilhafterweise ist die Auslassöffnung 3e, 5e nach unten, vorzugsweise in vertikaler Richtung ausgerichtet. In einer vorteilhaften Ausgestaltung kann die Ölabstreifpackung 1, wie in Figur 1 dargestellt, zudem noch zusätzliche Komponenten umfassen, beispielweise eine Kammerscheibe 10 umfassend eine Vorabstreiferkammer 10a zur Aufnahme eines Vorabstreifers 11 beziehungsweise eines Drosselrings 11, und/oder eine Kammerscheibe 7 mit darin angeordnetem Dichtring 8 und gegebenenfalls zudem ein neben dem Dichtring 8 angeordnetes Vorspannelement 9, welches zur axialen Vorspannung des Dichtrings 8 dient, damit der Dichtring 8 stabil an der Dichtfläche anliegt. Die Kammerscheibe 7 weist eine Trennwand 7c auf, und die Trennwand 7c weist zur Kolbenstange 2 einen Spalt 7b auf. Das Vorspannelement 9 kann beispielsweise eine Platte und mehrere in Längsrichtung L verlaufende Schraubenfedern umfassen, oder kann beispielsweise als eine Tellerfeder ausgestaltet sein. Die Kammerscheiben 3, 5 weisen zur Oberfläche der Kolbenstange 2 hin einen Spalt 3b, 5b auf, sodass die Kolbenstange 2 bezüglich der Kammerscheiben 3,5 berührungslos angeordnet ist, und sich die Kolbenstange 2 auch in radialer Richtung geringfügig bewegen kann. Die Figuren 7 und 8 zeigten die in Figur 1 dargestellten Kammerscheiben 3, 5 in perspektivischer Ansicht im Detail. Die Kammerscheibe 3, 5 umfasst die Abdichtplatte bzw. eine Trennwand 3c, 5c, wobei die Trennwand 3c an der Kammerscheibe 10 des Vorabstreifers 11 anliegt. In einer vorteilhaften Ausgestaltung liegen in Verlaufsrichtung L nacheinander folgend angeordnete Kammerscheiben 3,5,7 derart aneinander, dass die Kammerscheibenausnehmung 3a, 5a, mit Ausnahme der Auslassöffnung 3e, 5e und Bohrungen 3f, 5f fluiddicht ist, sodass das vom jeweiligen in der Kammerscheibe 3,5 angeordneten Abstreifring 4 abgestreifte Öl nach Möglichkeit ausschliesslich über die Auslassöffnung 3e, 5e abgeleitet wird. Die Kammerscheiben 3,5 weisen Bohrungen 3d, 5d auf, welche im zusammengebauten Zustand, wie in Figur 1 dargestellt, eine durch alle Kammerscheiben 3,5,7 verlaufende Bohrung 14 ausbilden, um die Kammerscheiben mit einem Befestigungsmittel wie einer Schraube zusammenzuhalten.

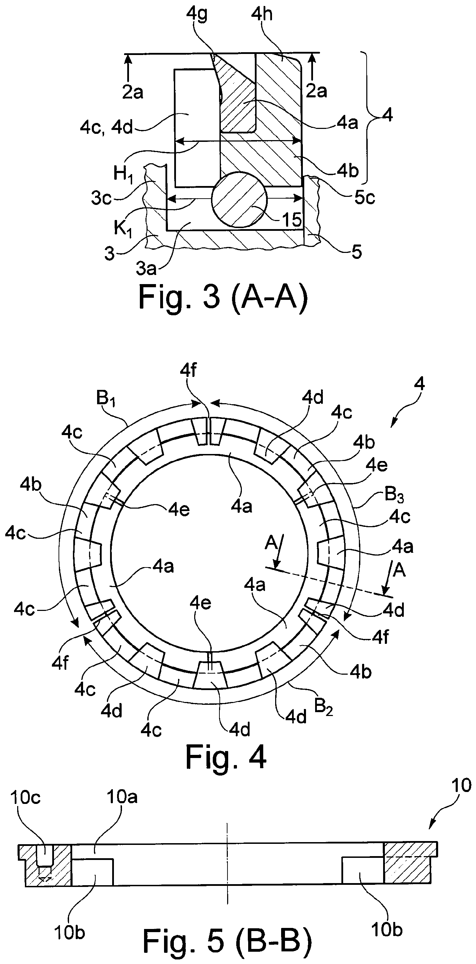

Figur 6 zeigt eine Draufsicht der Kammerscheibe 10, umfassend eine Mehrzahl von in Umfangsrichtung beabstandeten, in radialer Richtung vorstehenden Halteteile 10b, und umfassend drei Bohrungen 10c. Figur 5 zeigt einen Schnitt durch Figur 6 entlang der Schnittlinie B-B. Der nicht dargestellte Vorabstreifer 11 ist in der Vorabstreiferkammer 10a angeordnet. Da die durch die Kammerscheibe 3 ausgebildete Anliegefläche grösser ist als die durch die vorstehenden Halteteile 10b gebildete Anliegefläche hat der

Vorabstreifer 11 die Tendenz vorwiegend an der Anliegefläche der Kammerscheibe 3 anzuliegen.

Figur 4 zeigt ein Ausführungsbeispiel eines Abstreifrings 4 und Figur 3 zeigt einen Schnitt des Abstreifrings 4 entlang der Schnittlinie A-A, wobei in Figur 3 zudem ansatzweise noch die Kammerscheiben 3, 5 sowie die Kammerscheibenausnehmung 3a dargestellt ist. Der Abstreifring 4 kann in einer Vielzahl von Möglichkeiten ausgestaltet sein, sodass das dargestellte Ausführungsbeispiel nur ein Beispiel aus einer Vielzahl von Möglichkeiten darstellt. In einer besonders vorteilhaften Ausgestaltung liegt der Abstreifring 4, wie in den Figuren 1 und 3 dargestellt, flächig und vorzugsweise vollflächig an der in Längsrichtung L nächstfolgenden Kammerscheibe 5, 7 an, sodass an dieser flächigen Auflagestelle kaum oder kein Öl durch die Auflagestelle dringen kann. Der dargestellte Abstreifring 4 umfasst drei in Umfangsrichtung nacheinander folgend angeordnete, vorzugsweise metallische Abstreifklingen 4a mit Klingenspitze 4g und Stossstellen 4e, wobei die Abstreifklingen 4a in einer drei Haltevorrichtungsteile umfassende Haltevorrichtung 4b gehalten sind. Die Haltevorrichtung 4b besteht vorzugsweise aus Kunststoff. Die drei Haltevorrichtungsteile, welche in Umfangsrichtung nacheinander folgend und unter Ausbildung einer Stossstelle 4f angeordnet sind, erstrecken sich entlang von B1, B2 beziehungsweise B3. Wie in Figur 3 dargestellt ist die Haltevorrichtung 4b U-förmig ausgestaltet und weist zwei radiale Abschnitte auf, ein radiales Stützteil 4h, das sich vorzugsweise bis zur Oberfläche 2a der Kolbenstange 2 erstreckt, sowie ein radiales Halteteil 4d, das sich ebenfalls bis zur Oberfläche 2a der Kolbenstange 2 erstrecken kann, dass jedoch vorzugsweise, wie in Figur 3 dargestellt, zur Oberfläche 2a beabstandet endet. Das radiale Stützteil 4h erstreckt sich in Umfangsrichtung vorzugsweise entlang des gesamten Winkels von B1, B2 beziehungsweise B3. Jedes der drei Haltevorrichtungsteile der Haltevorrichtung 4b umfasst vorteilhafterweise mehrere radiale Halteteil 4d, welche, wie in den Figuren 3 und 4 dargestellt, in Umfangsrichtung gegenseitig beabstandet sind, vorzugsweise unter Ausbildung eines radialen Abführkanals 4c. Wie aus Figur 3 ersichtlich wird das sich auf der Oberfläche 2a der Kolbenstange 2 befindliche Öl von der an der Kolbenstange 2 anliegenden Klingenspitze 3g abgestreift, wobei das abgestreifte Öl über den Abführkanal 4c in den radial äusseren Bereich des Innenraums 3a gefördert wird, und vorzugsweise über die Auslassöffnung 3e abgegeben wird. Der Abstreifring 4 umfasst vorzugsweise eine aussen entlang der Haltevorrichtung 4b anliegende, umlaufende Feder 15, wie dies nur in Figur 3 dargestellt ist. Wie in Figur 3 dargestellt weist der Abstreifring 4 eine Abstreifringhöhe H1 auf, und weist die Kammerscheibenausnehmung 3a in Verlaufsrichtung L eine Kammerinnenraumhöhe K1 auf. In einer vorteilhaften Ausgestaltung ist die Kammerinnenraumhöhe K1 in Verlaufsrichtung L zwischen 0 mm bis 0,5 mm grösser ausgestaltet als die Abstreifringhöhe H1. Dies gilt insbesondere bei Umgebungstemperatur. In einer weiteren möglichen Ausführungsform könnte der gesamte Abstreifring 4 auch nur aus Metall oder nur aus Kunststoff bestehen. In einer weiteren möglichen Ausführungsform könnte der gesamte Abstreifring 4 auch endlos ausgestaltet sein, d.h. über 360° verlaufen. Zudem könnte der Abstreifring einstückig ausgestaltet sein, und/oder nur aus Metall oder nur aus Kunststoff bestehen und/oder nur aus demselben Material bestehen.

Die Ölabstreifpackung 1 wird vorzugsweise fertig konfiguriert zum Einbau in einen Kreuzkopf-Kolbenkompressor geliefert, indem werkmässig die Kammerscheiben 3, 5 in Verlaufsrichtung L nacheinander angeordnet und miteinander verbunden sind, wobei in jeder Kammerscheibenausnehmung 3a, 5a ein einziger Abstreifring 4 angeordnet ist, und wobei jeder Abstreifring 4 innerhalb der Kammerscheibe 3, 5 in Verlaufsrichtung L ein Spiel im Bereich zwischen grösser als 0 mm und 0,5 mm aufweist. Der Abstreifring 4 könne auch formschlüssig in der Kammerscheibe 3,5 angeordnet sein und daher in Verlaufsrichtung L kein Spiel bzw. ein Spiel von 0 mm aufweisen. Vorzugsweise weist die Kammerscheibe 3 eine senkrecht zur Verlaufsrichtung L ausgerichtete seitliche Auslassöffnung 3e aufweist, sodass die Kammerscheibenausnehmung 3a von Aussen zugänglich ist, wobei die Auslassöffnung 8
vorzugsweise derart angeordnet ist, dass das Spiel messbar ist, welches der Abstreifrings 4 in der Kammerscheibenausnehmung 3a aufweist. Vorzugsweise umfasst die Ölabstreifpackung 1 eine Befestigungsplatte 12, welche einen grösseren Aussendurchmesser aufweist als die Kammerscheibe 3, wobei in Verlaufsrichtung L nachfolgend der Befestigungsplatte 12 die Kammerscheiben 3, 5 angeordnet sind. Figur 2 zeigt eine derartige Ausführungsform. In Figur 2 müssten, wie in Figur 1 dargestellt, auch die beiden Abstreifringe 4, der Vorabstreifer 11, der Dichtring 8 und das Vorspannelement 9 angeordnet sein, um eine vollständige Ölabstreifpackung 1 auszubilden. Diese Elemente sind in Figur 2 an sich vorhanden, jedoch nicht dargestellt, damit die restlichen Merkmale klarer ersichtlich sind. Dies Ölabstreifpackung 1 weist den Vorteil auf, dass diese vorzugsweise in zusammengebautem Zustand in ein Gehäuse 17, vorzugsweise ein Zwischengehäuse des Kreuzkopf-Kolbenkompressors, eingeführt werden kann, indem die Ölabstreifpackung 1 derart über die Kolbenstange 2 gestossen wird, dass die Kolbenstange 2 durch die Bohrungen 3f, 5f und die Abstreifringe 4 verläuft. Das Gehäuse 17 umfasst vorteilhafterweise ein flanschförmiges Teil 17a zur Aufnahme der Ölabstreifpackung 1, und umfasst vorteilhafterweise einen Auslass 17b, um das abstreifte Öl abzuführen.

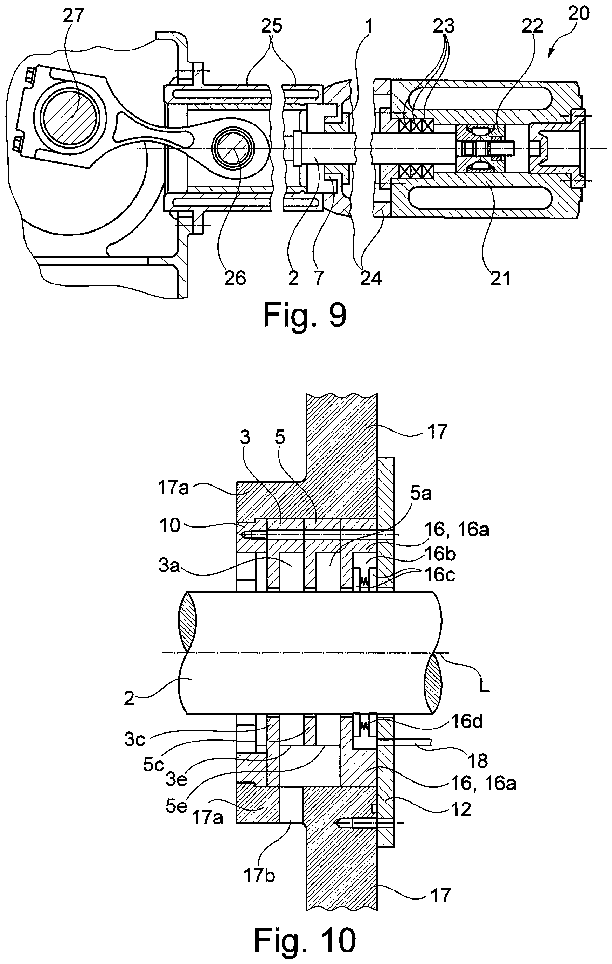

Figur 9 zeigt einen Längsschnitt durch einen Kreuzkopf-Kolbenkompressor 20 umfassend einen Zylinder 21, einen Kolben 22 mit daran befestigter Kolbenstange 2, eine Dichtungspackung 23, ein Zwischengehäuse 24, ein Kurbelwellengehäuse 25, einen Kreuzkopf 26, eine Kurbelwelle 27 sowie weitere nicht im Detail dargestellte Teile. Die erfindungsgemässe Ölabstreifpackung 1 ist am Zwischengehäuse 24 befestigt, wobei die Kolbenstange 2 durch die Ölabstreifpackung 1 verläuft. Die erfindungsgemässe Ölabstreifpackung 1 weist den Vorteil auf, dass diese vorzugsweise als Austauschteil ausgestaltet und vorkonfiguriert ist, und deshalb im vorkonfigurierten Zustand im Zwischengehäuse 24 montiert werden kann.

Die vorkonfigurierte Ölabstreifpackung 1 umfasst zumindest zwei in Verlaufsrichtung L beabstandete Kammerscheiben 3,5 mit Kammerscheibenausnehmungen 3a, 5a zur Aufnahme je eines Abstreifrings 4, wobei je ein Abstreifring 4 in je einer Kammerscheibenausnehmung 3a, 5a angeordnet ist, wobei Kammerscheiben 3, 5 umfassend die Kammerscheibenausnehmungen 3a, 5a fest miteinander verbunden werden zu der vorkonfigurierten Ölabstreifpackung 1. Eine vorkonfigurierte Ölabstreifpackung 1 wird vorteilhafterweise derart eingebaut, dass die Ölabstreifpackung 1 in den Kreuzkopf-Kolbenkompressor 20 eingebaut wird, und dass danach die Kolbenstange 2 in die vorkonfigurierte Ölabstreifpackung 1 sowie in deren Abstreifringe 4 eingeführt wird. Dadurch ist insbesondere sichergestellt, dass das Spiel der Abstreifringe 4 innerhalb der Kammerscheiben 3, 5 während der Montage nicht mehr verändert wird. Vorteilhafterweise weist der Abstreifring 4 in Verlaufsrichtung L eine Abstreifringhöhe H1 aufweist, und ist der Abstreifring 4 und die Kammerscheibenausnehmung 3a derart ausgestaltet werden, dass der Abstreifring 4 innerhalb der Kammerscheibenausnehmung 3a in Verlaufsrichtung L ein Spiel im Bereich zwischen mehr als 0 mm bis 0,5 mm aufweist.

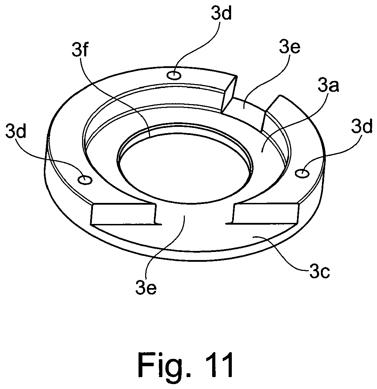

Vorteilhafterweise weist die Kammerscheibe 3, 5, wie in Figur 11 dargestellt, zumindest eine und vorteilhafterweise auch mehrere seitliche Auslassöffnungen 3e auf, welche derart ausgestaltet ist, dass die Kammerscheibenausnehmung 3a von Aussen zugänglich ist, sodass das Spiel, welches der Abstreifring 4 in der Kammerscheibenausnehmung 3a aufweist, über die Auslassöffnung 3e gemessen werden kann. Die Auslassöffnungen 3e können auch zum Abfliessen des abgestreiften Öls dienen, wobei eine Auslassöffnung 3e vorzugsweise derart angeordnet, dass diese vertikal nach unten verläuft, damit abgestreiftes Öl nach unten abfliessen kann.

Figur 10 zeigt ein weiteres Ausführungsbeispiel einer Ölabstreifpackung. Wie in Figur 2 sind auch in Figur 10 die an sich vorhandenen beiden Abstreifringe 4, der Vorabstreifer 11, der Dichtring 8 und das Vorspannelement 9 nicht dargestellt, damit die restlichen Merkmale klarer ersichtlich sind.Im Unterschied zu der in Figur 2 dargestellten Ölabstreifpackung 1 umfasst die in Figur 10 dargestellte Ölabstreifpackung 1 nachfolgend der Befestigungsplatte 12 eine Dichtmediumbarriere 16 umfassend eine

Barrierenkammerscheibe 16a mit einem Barriereninnenraum 16b, wobei im Barriereninnerraum 16b zwei Dichtelemente 16c über eine Feder 16d in Verlaufsrichtung L gegenseitig beabstandet angeordnet sind, und wobei eine Zuführungsleitung 18 für ein Fluid in den Barriereninnenraum 16b mündet, um eine in Verlaufsrichtung L gasdichte Barriere auszubilden.

## Patentansprüche

1. Ölabstreifpackung (1) für eine Kolbenstange (2) eines Kreuzkopf-Kolbenkompressors, umfassend
- eine Kammerscheibe (3) aufweisend eine Kammerscheibenausnehmung (3a) sowie eine Trennwand (3c) mit einer Bohrung (3f), wobei die Trennwand (3c) die Kammerscheibenausnehmung (3a) seitlich begrenzt, und wobei die Bohrung (3f) zum Durchführen der Kolbenstange (2) vorgesehen ist, sowie umfassend
- einen Abstreifring (4), wobei der Abstreifring (4) in der Kammerscheibenausnehmung (3a) angeordnet ist,
wobei in einer Verlaufsrichtung (L) nacheinander zumindest zwei Kammerscheiben (3, 5) aufweisend je eine Kammerscheibenausnehmung (3a, 5a) sowie je eine einzige Trennwand (3c, 5c) angeordnet sind, **dadurch gekennzeichnet, dass** in jeder Kammerscheibenausnehmung (3a, 5a) ein einziger Abstreifring (4) angeordnet ist, und wobei die zumindest zwei Kammerscheiben (3,5) in Verlaufsrichtung (L) in gleicher Ausrichtung angeordnet sind.

2. Ölabstreifpackung gemäss Anspruch 1, **dadurch gekennzeichnet, dass** die Kammerscheibenausnehmung (3a, 5a) in Verlaufsrichtung (L) eine Kammerinnenraumhöhe (K1) aufweist, dass der Abstreifring (4) in Verlaufsrichtung (L) eine Abstreifringhöhe (H1) aufweist, und dass bei Umgebungstemperatur die Kammerinnenraumhöhe (K1) zwischen 0 mm bis 0,5 mm grösser ist als die Abstreifringhöhe (H1).

3. Ölabstreifpackung gemäss Anspruch 1 oder 2, **dadurch gekennzeichnet, dass** jeder Abstreifring (4) innerhalb der jeweiligen Kammerscheibe (3,5) in Verlaufsrichtung (L) bei Umgebungstemperatur ein Spiel im Bereich zwischen grösser 0 mm und 0,5 mm aufweist.

4. Ölabstreifpackung gemäss einem der vorhergehenden Ansprüche, **dadurch gekennzeichnet, dass** die Kammerscheibe (3) und der Abstreifring (4) einen Wärmeausdehnungskoeffizient aufweisen, dass der Abstreifring (4) einen höheren Wärmeausdehnungskoeffizient als die Kammerscheibe (3) aufweist, dass der Abstreifring (4) bei Umgebungstemperatur in Verlaufsrichtung (L) ein Spiel in der Kammerscheibenausnehmung (3a, 5a) aufweist, und dass der Abstreifring (4) bei einer Betriebstemperatur (T_{b}), welche höher als die Umgebungstemperatur ist, ein reduziertes Spiel oder einen Formschluss in der Kammerscheibenausnehmung (3a, 5a) aufweist.

5. Ölabstreifpackung gemäss einem der Ansprüche 2 bis 4,
**dadurch gekennzeichnet, dass** alle Abstreifringe (4) bei Umgebungstemperatur dasselbe Spiel aufweisen.

6. Ölabstreifpackung gemäss einem der Ansprüche 2 bis 4,
**dadurch gekennzeichnet, dass** die Abstreifringe (4) von zumindest zwei in Verlaufsrichtung (L) nacheinander folgenden Paarungen von Abstreifring (4) und Kammerscheibe (3,5) ein unterschiedliches Spiel aufweisen.

7. Ölabstreifpackung gemäss Anspruch 6, **dadurch gekennzeichnet, dass** die Abstreifringe (4) von in Verlaufsrichtung (L) nacheinander folgenden Paarungen von Abstreifring (4) und Kammerscheibe (3,5) ein zunehmend grösseres Spiel aufweisen.

8. Ölabstreifpackung gemäss einem der Ansprüche 2 bis 7,
**dadurch gekennzeichnet, dass** die Ölabstreifpackung (1) fertig konfiguriert ist zum Einbau in einen Kreuzkopf-Kolbenkompressor, indem die Kammerscheiben (3, 5) in Verlaufsrichtung (L) nacheinander angeordnet und miteinander verbunden sind, dass in jeder Kammerscheibenausnehmung (3a, 5a) ein einziger Abstreifring (4) angeordnet ist, und dass jeder Abstreifring (4) innerhalb der Kammerscheibe (3) in Verlaufsrichtung (L) ein Spiel im Bereich zwischen grösser 0 mm und 0,5 mm aufweisen.

9. Ölabstreifpackung gemäss Anspruch 8, **dadurch gekennzeichnet, dass** jede der Kammerscheiben (3, 5) eine senkrecht zur Verlaufsrichtung (L) ausgerichtete seitliche Auslassöffnung (3e, 5e) aufweist, sodass die Kammerscheibenausnehmung (3a, 5a) von Aussen zugänglich ist, wobei die Auslassöffnung (3e, 5e) derart angeordnet ist, dass das Spiel messbar ist, welches der Abstreifrings (4) in der Kammerscheibenausnehmung (3a, 5a) aufweist.

10. Ölabstreifpackung gemäss einem der Ansprüche 8 oder 9, **dadurch gekennzeichnet, dass** diese eine Befestigungsplatte (12) umfasst, welche einen grösseren Aussendurchmesser aufweist als jede der Kammerscheiben (3, 5), und dass in Verlaufsrichtung (L) nachfolgend der Befestigungsplatte (12) die Kammerscheiben (3, 5) angeordnet sind.

11. Ölabstreifpackung gemäss Anspruch 10, **dadurch gekennzeichnet, dass** in Verlaufsrichtung (L) nachfolgend der Befestigungsplatte (12) eine Kammerscheibe (7) mit einem Innenraum (7a) angeordnet ist, und dass im Innenraum (7a) eine gasdichte Dichtungsanordnung (8,9) angeordnet ist.

12. Ölabstreifpackung gemäss Anspruch 10 oder 11,
**dadurch gekennzeichnet, dass** in Verlaufsrichtung (L) nachfolgend der Kammerscheiben (3) eine Vorabstreiferkammerscheibe (10) umfassend eine Vorabstreifkammer (10a) angeordnet ist, und dass in der Vorabstreifkammer (10a) ein Vorabstreifer (11) angeordnet ist.

13. Ölabstreifpackung gemäss einem der Ansprüche 10 bis 12, **dadurch gekennzeichnet, dass** in Verlaufsrichtung (L) nachfolgend der Befestigungsplatte (12) eine Dichtmediumbarriere (16) angeordnet ist, umfassend eine Barrierenkammerscheibe (16a) mit einem Barriereninnenraum (16b), wobei im Barriereninnerraum (16b) zwei Dichtelemente (16c) in Verlaufsrichtung (L) gegenseitig beabstandet angeordnet sind, und wobei eine Zuführungsleitung (17) für ein Fluid zwischen den zwei Dichtelementen (16c) in den Barriereninnenraum (16b) mündet, um eine in Verlaufsrichtung (L) gasdichte Barriere auszubilden.

14. Ölabstreifpackung gemäss einem der Ansprüche 8 bis 13, **dadurch gekennzeichnet, dass** jeder Abstreifring (4) in radialer Richtung verlaufende Abführkanäle (4c) aufweist, welche sich in radialer Richtung über die gesamte Breite des Abstreifrings (4) erstrecken.

15. Verfahren zum Einbau einer Ölabstreifpackung (1) in einen Kreuzkopf-Kolbenkompressor, wobei der Kreuzkopf-Kolbenkompressor eine sich in einer Verlaufsrichtung (L) erstreckende Kolbenstange (2) umfasst,
- wobei in einem ersten Verfahrensschritt die Ölabstreifpackung (1) vorkonfiguriert wird, indem in einer Kammerscheibe (3) aufweisend je eine Kammerscheibenausnehmung (3a) sowie je eine Trennwand (3c) mit einer Bohrung (3f) ein einziger Abstreifring (4) in der Kammerscheibenausnehmung (3a) angeordnet wird, wobei die Kammerscheibenausnehmung (3a) durch die Trennwand (3c) seitlich begrenzt wird, **dadurch gekennzeichnet,**
- **dass** zumindest zwei Kammerscheiben (3) mit jeweils darin angeordnetem Abstreifring (4) in einer Verlaufsrichtung (L) in gleicher Ausrichtung nacheinander angeordnet werden und die Kammerscheiben (3) miteinander verbunden werden, und
- **dass** in einem zweiten Verfahrensschritt die vorkonfigurierte Ölabstreifpackung (1) durch eine Bewegung in Verlaufsrichtung (L) derart an der Kolbenstange (2) angeordnet wird, dass die Kolbenstange (2) durch jeweils eine Bohrung (3f) der Trennwand (3c) verläuft, und die Kammerscheibe (3) sowie der Abstreifring (4) die Kolbenstange (2) umschliesst.

16. Verfahren gemäss Anspruch 15, **dadurch gekennzeichnet, dass** jede der Kammerscheibenausnehmungen (3a) in Verlaufsrichtung (L) eine Kammerinnenraumhöhe (K1) aufweist, dass jeder der Abstreifringe (4) in Verlaufsrichtung (L) eine Abstreifringhöhe (H1) aufweist, und dass jeder Abstreifring (4) und jede Kammerscheibenausnehmung (3a) derart kombiniert werden, dass bei Umgebungstemperatur die Kammerinnenraumhöhe (K1) zwischen 0 mm bis 0,5 mm grösser ist als die Abstreifringhöhe (H1).

17. Verfahren gemäss Anspruch 16, **dadurch gekennzeichnet, dass** der Abstreifring (4) innerhalb der Kammerscheibenausnehmung (3a) in Verlaufsrichtung (L) ein Spiel im Bereich zwischen grösser 0 mm bis 0,5 mm aufweist.

18. Verfahren gemäss einem der Ansprüche 15 bis 17,
**dadurch gekennzeichnet, dass** der Abstreifring (4) einen höheren Wärmeausdehnungskoeffizient als die Kammerscheibe (3) aufweist, dass der Abstreifring (4) bei Umgebungstemperatur in Verlaufsrichtung (L) ein Spiel in der Kammerscheibenausnehmung (3a, 5a) aufweist, und dass der Abstreifring (4) bei einer Betriebstemperatur (T_{b}), welche höher als die Umgebungstemperatur ist, ein reduziertes Spiel oder einen Formschluss in der Kammerscheibenausnehmung (3a, 5a) aufweist.

19. Verfahren gemäss einem der Ansprüche 15 bis 18,
**dadurch gekennzeichnet, dass** die Kammerscheibe (3) zumindest eine senkrecht zur Verlaufsrichtung (L) ausgerichtete seitliche Auslassöffnung (3e) aufweist, sodass die Kammerscheibenausnehmung (3a) von Aussen zugänglich ist, und dass das Spiel, welches der Abstreifrings (4) in der Kammerscheibenausnehmung (3a) aufweist, über die Auslassöffnung (3e) gemessen wird.

## Claims

1. Oil wiper packing (1) for a piston rod (2) of a crosshead piston compressor, comprising
- a chamber disc (3) having a chamber disc cut-out (3a) and a partition wall (3c) with a bore (3f), wherein the partition wall (3c) laterally delimits the chamber disc cut-out (3a), and wherein the bore (3f) is provided for passage of the piston rod (2), and comprising
- a wiper ring (4), wherein the wiper ring (4) is arranged in the chamber disc cut-out (3a), wherein at least two chamber discs (3, 5), which each have a chamber disc cut-out (3a, 5a) and a single partition wall (3c, 5c), are arranged successively in a running direction (L), **characterized in that** a single wiper ring (4) is arranged in each chamber disc cut-out (3a, 5a), and wherein the at least two chamber discs (3, 5) in the running direction (L) are arranged in the same orientation.

2. Oil wiper packing according to Claim 1, **characterized in that** the chamber disc cut-out (3a, 5a) has a chamber interior height (K1) in the running direction (L), that the wiper ring (4) has a wiper ring height (H1) in the running direction (L), and that at ambient temperature, the chamber interior height (K1) is between 0 mm and 0.5 mm larger than the wiper ring height (H1).

3. Oil wiper packing according to Claim 1 or 2, **characterized in that** each wiper ring (4) has a play in the range of between more than 0 mm and 0.5 mm in the running direction (L) inside the respective chamber disc (3, 5) at ambient temperature.

4. Oil wiper packing according to one of the preceding claims, **characterized in that** the chamber disc (3) and the wiper ring (4) have a thermal expansion coefficient, **in that** the wiper ring (4) has a higher thermal expansion coefficient than the chamber disc (3), **in that** the wiper ring (4) has a play in the running direction (L) in the chamber disc cut-out (3a, 5a) at ambient temperature, and **in that** at an operating temperature (T_{b}) which is higher than the ambient temperature, the wiper ring (4) has a reduced play or a form-fit connection in the chamber disc cut-out (3a, 5a).

5. Oil wiper packing according to one of claims 2 to 4, **characterized in that** all wiper rings (4) have the same play at ambient temperature.

6. Oil wiper packing according to one of claims 2 to 4, **characterized in that** the wiper rings (4) of at least two successive pairs of wiper ring (4) and chamber disc (3, 5) succeeding each other in the running direction (L) have a different play.

7. Oil wiper packing according to claim 6, **characterized in that** the wiper rings (4) of successive pairs of wiper ring (4) and chamber disc (3, 5) in the running direction (L) have an increasingly larger play.

8. Oil wiper packing according to one of claims 2 to 7, **characterized in that** the oil wiper packing (1) is fully configured for installation in a crosshead piston compressor, **in that** the chamber discs (3, 5) are arranged successively in the running direction (L) and are connected together, that a single wiper ring (4) is arranged in each chamber disc cut-out (3a, 5a), and that each wiper ring (4) has a play in the range of between more than 0 mm and 0.5 mm in the running direction (L) inside the chamber disc (3).

9. Oil wiper packing according to claim 8, **characterized in that** each of the chamber discs (3, 5) has a lateral outlet opening (3e, 5e) oriented perpendicularly to the running direction (L), so that the chamber disc cut-out (3a, 5a) is accessible from the outside, wherein the outlet opening (3e, 5e) is arranged such that the play of the wiper ring (4) in the chamber disc cut-out (3a, 5a) can be measured.

10. Oil wiper packing according to one of claims 8 or 9, **characterized in that** said oil wiper packing comprises a fixing plate (12) which has a larger outer diameter than each of the chamber discs (3, 5), and **in that** the chamber discs (3, 5) are arranged following the fixing plate (12) in the running direction (L).

11. Oil wiper packing according to claim 10, **characterized in that** a chamber disc (7) with an interior space (7a) is arranged following the fixing plate (12) in the running direction (L), and **in that** a gas-tight sealing arrangement (8, 9) is arranged in the interior space (7a).

12. Oil wiper packing according to claim 10 or 11, **characterized in that** a pre-wiper chamber disc (10) comprising a pre-wiper chamber (10a) is arranged following the chamber discs (3) in the running direction (L), and that a pre-wiper (11) is arranged in the pre-wiper chamber (10a).

13. Oil wiper packing according to one of claims 10 to 12, **characterized in that** a sealing medium barrier (16) is arranged following the fixing plate (12) in the running direction (L) and comprises a barrier chamber disc (16a) with a barrier interior space (16b), wherein two sealing elements (16c) are arranged in the barrier interior space (16b) and mutually spaced apart in the running direction (L), and wherein a supply line (17) for a fluid opens into the barrier interior space (16b) between two sealing elements (16c) in order to form a gas-tight barrier in the running direction (L) .

14. Oil wiper packing according to one of claims 8 to 13, **characterized in that** each wiper ring (4) has two discharge channels (4c) running in the radial direction and extending over the entire width of the wiper ring (4) in the radial direction.

15. Method for installing an oil wiper packing (1) in a crosshead piston compressor, wherein the crosshead piston compressor comprises a piston rod (2) extending in a running direction (L),
- wherein, in a first method step, the oil wiper packing (1) is pre-configured in that, in a chamber disc (3) having a chamber disc cut-out (3a) and having a partition wall (3c) with a bore (3f), a single wiper ring (4) is arranged in the chamber disc cut-out (3a), wherein the chamber disc cut-out (3a) is laterally delimited by the partition wall (3c),
**characterized in that**
- at least two chamber discs (3) each with a wiper ring (4) arranged therein are arranged successively in the same orientation in a running direction (L), and the chamber discs (3) are connected together, and **in that**
- in a second method step, the preconfigured oil wiper packing (1) is arranged on the piston rod (2) by a movement in the running direction (L) such that the piston rod (2) runs through a respective bore (3f) of the partition wall (3c), and the chamber disc (3) and the wiper ring (4) surround the piston rod (2).

16. Method according to claim 15, **characterized in that** each of the chamber disc cut-outs (3a) has a chamber interior height (K1) in the running direction (L), that each of the wiper rings (4) has a wiper ring height (H1) in the running direction (L), and that each wiper ring (4) and each chamber disc cut-out (3a) are combined such that at ambient temperature, the chamber interior height (K1) is between 0 mm and 0.5 mm greater than the wiper ring height (H1).

17. Method according to claim 16, **characterized in that** the wiper ring (4) has a play in the range of between more than 0 mm and 0.5 mm in the running direction (L) inside the chamber disc cut-out (3a) .

18. Method according to one of claims 15 to 17, **characterized in that** the wiper ring (4) has a higher thermal expansion coefficient than the chamber disc (3), that the wiper ring (4) has a play in the running direction (L) in the chamber disc cut-out (3a, 5a) at ambient temperature, and that at an operating temperature (T_{b}) which is higher than the ambient temperature, the wiper ring (4) has a reduced play or a form-fit connection in the chamber disc cut-out (3a, 5a).

19. Method according to one of claims 15 to 18, **characterized in that** the chamber disc (3) has at least one lateral outlet opening (3e) oriented perpendicularly to the running direction (L), so that the chamber disc cut-out (3a) is accessible from the outside, and that the play of the wiper ring (4) in the chamber disc cut-out (3a) is measured via the outlet opening (3a).

## Revendications

1. Garniture de raclage d'huile (1) pour une tige de piston (2) d'un compresseur à piston à crosse, comprenant
- un disque à chambre (3) présentant un évidement de disque à chambre (3a) ainsi qu'une paroi de séparation (3c) avec un alésage (3f), la paroi de séparation (3c) délimitant latéralement l'évidement de disque à chambre (3a) et l'alésage (3f) étant prévu pour le passage de la tige de piston (2),
et comprenant
- une bague de raclage (4), la bague de raclage (4) étant disposée dans l'évidement de disque à chambre (3a), au moins deux disques à chambre (3, 5) présentant chacun, dans une direction d'étendue (L) l'un derrière l'autre, un évidement de disque à chambre (3a, 5a) ainsi que chacun une paroi de séparation unique (3c,
5c),
**caractérisée en ce que**
dans chaque évidement de disque à chambre (3a, 5a) est disposée une bague de raclage (4), et
les au moins deux disques à chambre (3, 5) étant disposés dans la même orientation dans la direction d'étendue (L).

2. Garniture de raclage d'huile selon la revendication 1, **caractérisée en ce que** l'évidement de disque à chambre (3a, 5a) présente, dans la direction d'étendue (L), une hauteur d'espace interne de chambre (K1), **en ce que** la bague de raclage (4) présente, dans la direction d'étendue (L), une hauteur de bagues de raclage (H1), et **en ce qu'**à la température ambiante, la hauteur d'espace interne de chambre (K1) est supérieure de 0 à 0,5 mm à la hauteur de bagues de raclage (H1).

3. Garniture de raclage d'huile selon la revendication 1 ou 2, **caractérisée en ce que** chaque bague de raclage (4) présente, à l'intérieur du disque à chambre respectif (3, 5), dans la direction d'étendue (L) à la température ambiante, un jeu compris dans une plage de plus de 0 mm à 0,5 mm.

4. Garniture de raclage d'huile selon l'une quelconque des revendications précédentes, **caractérisée en ce que** le disque à chambre (3) et la bague de raclage (4) présentent un coefficient de dilatation thermique, **en ce que** la bague de raclage (4) présente un coefficient de dilatation thermique plus élevé que le disque à chambre (3), **en ce que** la bague de raclage (4), à la température ambiante, présente, dans la direction d'étendue (L), un jeu dans l'évidement de disque à chambre (3a, 5a) et **en ce que** la bague de raclage (4), à une température de fonctionnement (T_{b}) qui est supérieure à la température ambiante, présente un jeu réduit ou un engagement par correspondance de formes dans l'évidement de disque à chambre (3a, 5a).

5. Garniture de raclage d'huile selon l'une quelconque des revendications 2 à 4, **caractérisée en ce que** toutes les bagues de raclage (4) présentent le même jeu à la température ambiante.

6. Garniture de raclage d'huile selon l'une quelconque des revendications 2 à 4, **caractérisée en ce que** les bagues de raclage (4) d'au moins deux appariements de bague de raclage (4) et de disque à chambre (3, 5) successifs dans la direction d'étendue (L), présentent un jeu différent.

7. Garniture de raclage d'huile selon la revendication 6, **caractérisée en ce que** les bagues de raclage (4) d'appariements de bague de raclage (4) et de disque à chambre (3, 5) successifs dans la direction d'étendue (L), présentent un jeu de plus en plus grand.

8. Garniture de raclage d'huile selon l'une quelconque des revendications 2 à 7, **caractérisée en ce que** la garniture de raclage d'huile (1) est configurée sous forme préfabriquée pour l'installation dans un compresseur à piston à crosse par le fait que les disques à chambre (3, 5) sont disposés l'un derrière l'autre dans la direction d'étendue (L) et sont connectés l'un à l'autre, **en ce que** dans chaque évidement de disque à chambre (3a, 5a) est disposée une seule bague de raclage (4) et **en ce que** chaque bague de raclage (4) à l'intérieur du disque à chambre (3) présente, dans la direction d'étendue (L), un jeu dans une plage comprise entre plus de 0 mm et 0,5 mm.

9. Garniture de raclage d'huile selon la revendication 8, **caractérisée en ce que** chacun des disques à chambre (3, 5) présente une ouverture de sortie latérale (3e, 5e) orientée perpendiculairement à la direction d'étendue (L), de telle sorte que l'évidement de disque à chambre (3a, 5a) soit accessible depuis l'extérieur, l'ouverture de sortie (3e, 5e) étant disposée de telle sorte que l'on puisse mesurer le jeu que présente la bague de raclage (4) dans l'évidement de disque à chambre (3a, 5a).

10. Garniture de raclage d'huile selon l'une quelconque des revendications 8 et 9, **caractérisée en ce qu'**elle comprend une plaque de fixation (12) qui présente un plus grand diamètre extérieur que chacun des disques à chambre (3, 5), et **en ce que** les disques à chambre (3, 5) sont disposés dans la direction d'étendue (L) après la plaque de fixation (12).

11. Garniture de raclage d'huile selon la revendication 10, **caractérisée en ce qu'**un disque à chambre (7) avec un espace interne (7a) est disposé dans la direction d'étendue (L) après la plaque de fixation (12), et **en ce qu'**un agencement de garniture étanche aux gaz (8, 9) est disposé dans l'espace interne (7a).

12. Garniture de raclage d'huile selon la revendication 10 ou 11, **caractérisée en ce qu'**un disque à chambre de raclage préliminaire (10) comprenant une chambre de raclage préliminaire (10a) est disposé dans la direction d'étendue (L) après les disques à chambre (3), et **en ce qu'**un racloir préliminaire (11) est disposé dans la chambre de raclage préliminaire (10a).

13. Garniture de raclage d'huile selon l'une quelconque des revendications 10 à 12, **caractérisée en ce qu'**une barrière à milieu d'étanchéité (16) est disposée dans la direction d'étendue (L) après la plaque de fixation (12), laquelle comprend un disque à chambre barrière (16a) avec un espace interne barrière (16b), deux éléments d'étanchéité (16c) étant disposés à une distance mutuelle l'un de l'autre dans la direction d'étendue (L) dans l'espace interne barrière (16b), et une conduite d'alimentation (17) pour un fluide débouchant entre les deux éléments d'étanchéité (16c) dans l'espace interne barrière (16b) afin de réaliser une barrière étanche aux gaz dans la direction d'étendue (L).

14. Garniture de raclage d'huile selon l'une quelconque des revendications 8 à 13, **caractérisée en ce que** chaque bague de raclage (4) présente des canaux d'évacuation (4c) s'étendant dans la direction radiale, qui s'étendent dans la direction radiale sur toute la largeur de la bague de raclage (4).

15. Procédé pour l'installation de la garniture de raclage d'huile (1) dans un compresseur à piston à crosse, le compresseur à piston à crosse comprenant une tige de piston (2) s'étendant dans une direction d'étendue (L), dans lequel
- dans une première étape de procédé, la garniture de raclage d'huile (1) est préconfigurée par le fait que, dans un disque à chambre (3) présentant à chaque fois un évidement de disque à chambre (3a) ainsi qu'une paroi de séparation (3c) avec un alésage (3f), une bague de raclage unique (4) est disposée dans l'évidement de disque à chambre (3a), l'évidement de disque à chambre (3a) étant délimité latéralement par la paroi de séparation (3c),
**caractérisé en ce que**
- au moins deux disques à chambre (3) avec une bague de raclage (4) disposée dans chacun d'eux, sont disposés dans la direction d'étendue (L) l'un derrière l'autre dans la même orientation et les disques à chambre (3) sont reliés l'un à l'autre, et
- dans une deuxième étape de procédé, la garniture de raclage d'huile préconfigurée (1) est disposée par un déplacement dans la direction d'étendue (L) contre la tige de piston (2) de telle sorte que la tige de piston (2) s'étende à chaque fois à travers un alésage (3f) de la paroi de séparation (3c), et que le disque à chambre (3) ainsi que la bague de raclage (4) entourent la tige de piston (2).

16. Procédé selon la revendication 15, **caractérisé en ce que** chacun des évidements de disque à chambre (3a) présente, dans la direction d'étendue (L), une hauteur d'espace interne de chambre (K1), **en ce que** chacune des bagues de raclage (4) présente, dans la direction d'étendue (L), une hauteur de bagues de raclage (H1), et **en ce que** chaque bague de raclage (4) et chaque évidement de disque à chambre (3a) sont combinés de telle sorte qu'à la température ambiante, la hauteur d'espace interne de chambre (K1) soit supérieure de 0 à 0,5 mm à la hauteur de bagues de raclage (H1).

17. Procédé selon la revendication 16, **caractérisé en ce que** la bague de raclage (4) présente, à l'intérieur de l'évidement de disque à chambre (3a), dans la direction d'étendue (L), un jeu compris dans une plage de plus de 0 mm à 0,5 mm.

18. Procédé selon l'une quelconque des revendications 15 à 17, **caractérisé en ce que** la bague de raclage (4) présente un coefficient de dilatation thermique plus élevé que le disque à chambre (3), **en ce que** la bague de raclage (4), à la température ambiante, présente, dans la direction d'étendue (L), un jeu dans l'évidement de disque à chambre (3a, 5a) et **en ce que** la bague de raclage (4), à une température de fonctionnement (T_{b}) qui est supérieure à la température ambiante, présente un jeu réduit ou un engagement par correspondance de formes dans l'évidement de disque à chambre (3a, 5a).

19. Procédé selon l'une quelconque des revendications 15 à 18, **caractérisé en ce que** le disque à chambre (3) présente au moins une ouverture de sortie latérale (3e) orientée perpendiculairement à la direction d'étendue (L), de telle sorte que l'évidement de disque à chambre (3a) soit accessible depuis l'extérieur, et **en ce que** le jeu que présente la bague de raclage (4) dans l'évidement de disque à chambre (3a), est mesuré sur l'ouverture de sortie (3e).
